# EUROPÄISCHE PATENTSCHRIFT

(11) **EP 0 775 841 B1**
(45) Veröffentlichungstag und Bekanntmachung des Hinweises auf die Patenterteilung: **08.03.2000**
(21) Anmeldenummer: 96118594.9
(22) Anmeldetag: 20.11.1996
(51) Int. Cl.: F16C 11/06, B60G 7/00, B60G 21/055

(54) **Vorrichtung zur Festlegung einer Lagerschale eines Gelenkes in einer Aufnahmeöffnung**
Device for fixing the lining of a joint in a receiving opening
Dispositif de fixation du coussinet d'un joint dans un logement cylindrique

(30) Priorität: 23.11.1995 DE 19543688
(43) Veröffentlichungstag der Anmeldung: 28.05.1997
(73) Patentinhaber: TRW Fahrwerksysteme GmbH & Co. KG, 40547 Düsseldorf (DE)
(72) Erfinder: Kraps, Jakob, 41542 Dormagen (DE)
(74) Vertreter: Stenger, Watzke & Ring Patentanwälte

(56) Entgegenhaltungen:
- EP-A- 0 082 638
- FR-A- 998 406
- FR-A- 2 170 608
- FR-A- 2 394 704
- GB-A- 161 352
- GB-A- 1 246 287
- GB-A- 2 006 319
- GB-A- 2 171 449
- US-A- 4 606 668
- US-A- 4 624 674
- US-A- 5 290 120

## Beschreibung

Die Erfindung betrifft eine Vorrichtung zur Festlegung einer Lagerschale eines Gelenkes, insbesondere für Radaufhängungen von Kraftfahrzeugen, in einer Aufnahmeöffnung, insbesondere eines Lenkers oder Stabilisators.

Gelenke für Radaufhängungen von Kraftfahrzeugen sind in vielen Ausführungsformen bekannt. Die Gelenke umfassen jeweils einen verdrehbaren und/oder begrenzt kippbaren Lagerzapfen, der bei den meisten Gelenkausführungen als Kugelzapfen ausgebildet ist und mit einem Teil der Radaufhängung oder des Fahrgestells verbunden ist. Mittels der den Lagerzapfen aufnehmenden Lagerschale ist das Gelenk mit dem Fahrgestell bzw. einem Teil der Radaufhängung verbunden, so daß diese beiden Teile über das Gelenk begrenzt zueinander beweglich sind.

Um die Lagerschale derartiger Gelenke in einer Aufnahmeöffnung des jeweiligen Teiles zu befestigen, ist es bekannt, die Lagerschale mit Halteflanschen zu versehen, die nach dem Einsetzen der Lagerschale in die Aufnahmeöffnung plastisch verformt werden, um die Lagerschale in der Aufnahmeöffnung zu halten. Weiterhin ist es insbesondere bei aus Kunststoff hergestellten Lagerschalen bekannt, diese mit elastisch verformbaren Haltehaken zu versehen, die nach dem Einsetzen der Lagerschale in eine Aufnahmeöffnung speziell vorgesehene Halteflächen hintergreifen und auf diese Weise die Lagerschale in der Aufnahmeöffnung festhalten. (US-A-5 290 120).

Der Nachteil dieser bekannten Konstruktionen zur Festlegung einer Lagerschale eines Gelenkes in einer Aufnahmeöffnung ist darin zu sehen, daß nicht nur die Aufnahmeöffnung exakt auf die Abmessungen der einzusetzenden Lagerschale abgestimmt sein muß, sondern daß auch die Halteflächen mit großer Genauigkeit hergestellt werden müssen, die mit den plastisch oder elastisch verformbaren Teilen der Halteschale zusammenwirken.

Der Erfindung liegt die **Aufgabe** zugrunde, eine Vorrichtung zur Festlegung einer Lagerschale eines Gelenkes in einer Aufnahmeöffnung zu schaffen, bei der nicht nur spezielle Halteflächen für die Festlegung der Lagerschale in der Aufnahmeöffnung entfallen, sondern auch die Anforderungen an die Genauigkeit der Aufnahmeöffnung herabgesetzt werden, so daß sich insgesamt eine Verringerung der Kosten für die Festlegung der Lagerschale ergibt.

Die **Lösung** dieser Aufgabenstellung durch die Erfindung ist dadurch gekennzeichnet, daß die Lagerschale mit einer konischen, sich in Richtung auf den Gelenkzapfen verjüngenden Mantelfläche ausgebildet ist, auf der ein Klemmring mit einer entsprechend konischen Gegenfläche angeordnet ist, der sich mit seiner zylindrischen Mantelfläche in der Aufnahmeöffnung abstützt.

Bei der erfindungsgemäßen Konstruktion erfolgt die Festlegung der Lagerschale in der Aufnahmeöffnung ohne zusätzliche Anlageflächen allein aufgrund der mittels der konischen Mantelfläche der Lagerschale und der konischen Gegenfläche des Klemmringes erfolgenden radialen Aufweitung. Durch eine entsprechende Gestaltung der konischen Flächen ist es hierbei möglich, auf eine hohe Fertigungsgenauigkeit der Aufnahmeöffnung zu verzichten. Auf diese Weise können der Bearbeitungsaufwand und damit die Bearbeitungskosten erheblich gesenkt werden.

Bei einer erfindungsgemäßen Weiterbildung kann der Klemmring mit einer Querbohrung für einen Lagerbolzen versehen sein, der seinerseits in Lageröffnungen des die Lagerschale aufnehmenden Bauteils eingreift. Hierdurch ergibt sich auf einfache Weise eine formschlüssige Festlegung des Klemmringes am Bauteil. Vorzugsweise wird die Querbohrung im Bereich eines geschlossenen Bodens des büchsenförmig ausgebildeten Klemmringes ausgebildet.

Bei einer alternativen Weiterbildung der Erfindung ist der Klemmring mit einer Abstützfläche für eine zwischen dem Klemmring und der Lagerschale angeordnete Spreizfeder versehen. Hierdurch ergibt sich eine selbsttätige, kraftschlüssige Festlegung der Lagerschale mit gleichzeitigem Toleranz- und Spielausgleich bei Verschleiß. Die Spreizfeder kann bei bevorzugten Ausführungsformen der Erfindung als Gummiring oder als Kegelfeder ausgeführt sein.

Mit der Erfindung wird schließlich vorgeschlagen, die Lagerschale und den Klemmring aus Kunststoff, vorzugsweise Polyacetalen (POM) herzustellen, um einerseits gute Lagereigenschaften für den Lagerzapfen und andererseits eine zuverlässige Festlegung in der Aufnahmeöffnung des jeweiligen Bauteils zu erreichen.

Auf der Zeichnung sind drei Ausführungsbeispiele der erfindungsgemäßen Vorrichtung dargestellt, und zwar zeigt:
- Fig. 1: einen Längsschnitt durch ein mit einer erfindungsgemäßen Lagerschale ausgestattetes Kugelgelenk, das im Ende eines rohrförmigen Bauteils angeordnet ist,
- Fig. 2: einen der Fig. 1 entsprechenden Längsschnitt durch eine zweite Ausführungsform mit in einer Durchgangsbohrung eines Bauteils festgelegter Lagerschale und
- Fig. 3: einen weiteren Längsschnitt durch ein Kugelgelenk mit einer dritten Ausführungsform der Lagerschale, die in einer Sacklochbohrung eines Bauteils angeordnet ist.

Bei allen drei Ausführungsbeispielen ist das Gelenk als Kugelgelenk ausgeführt, dessen mit einem abgeflachten Kugelkopf 1a versehener Gelenkzapfen 1 in einer Lagerschale 2 verdrehbar und begrenzt kippbar gelagert ist, die ihrerseits in einer Aufnahmeöffnung 3a eines Bauteils 3 angeordnet ist, bei dem es sich insbesondere um ein Teil einer Radaufhängung von Kraftfahrzeugen handelt, beispielsweise um einen Lenker oder Stabilisator.

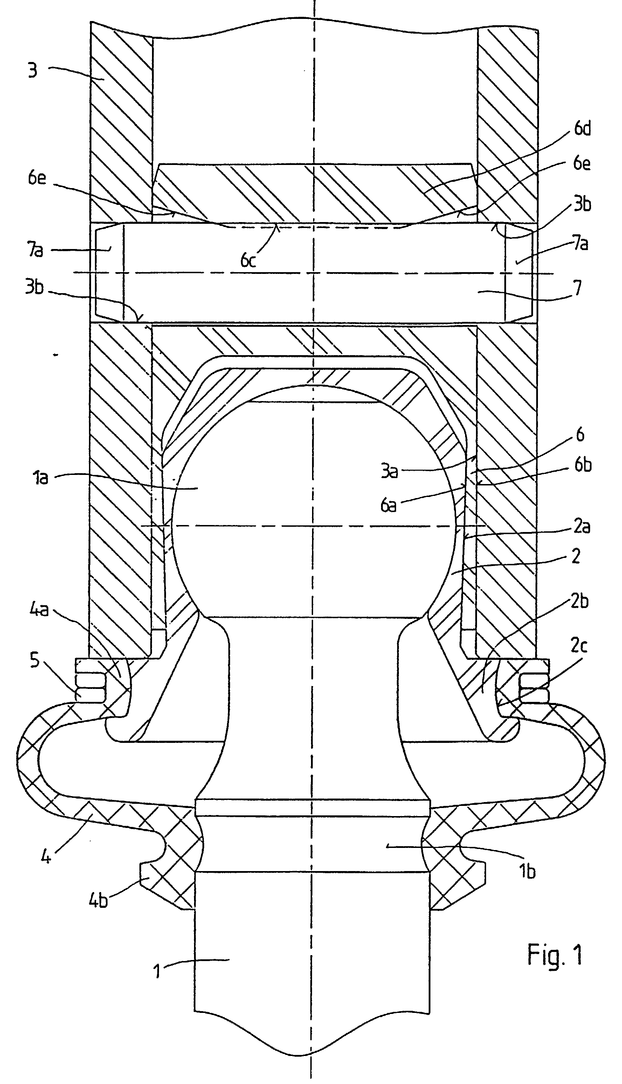

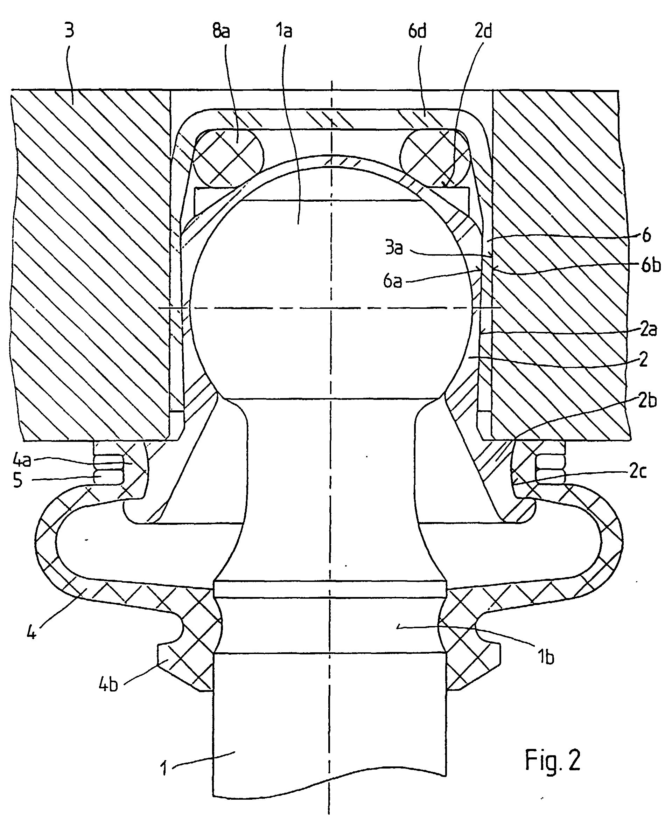

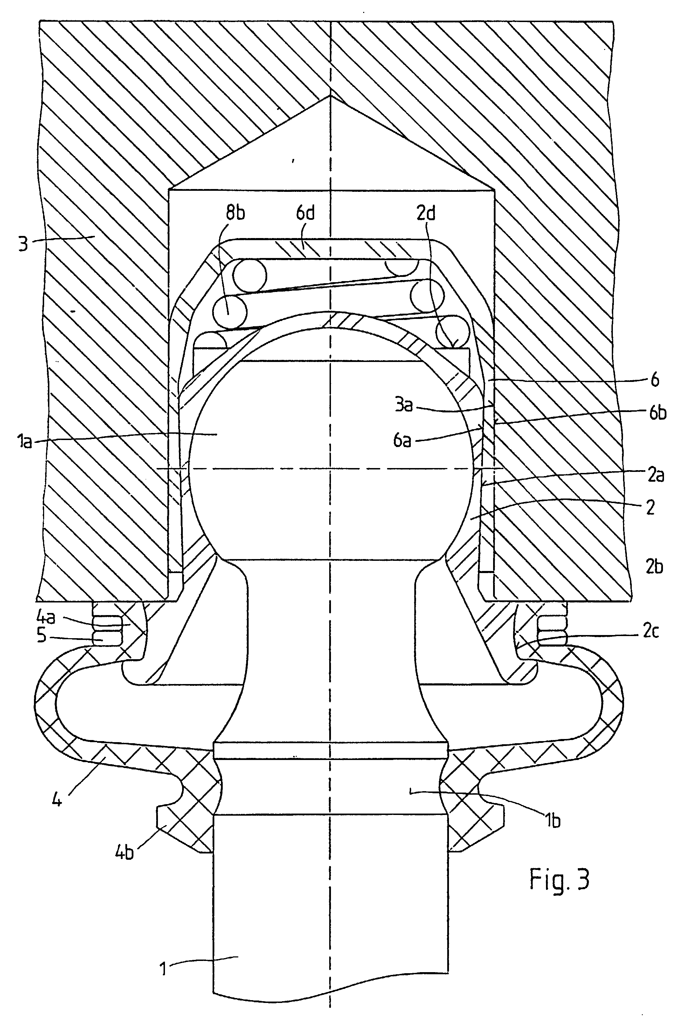

Bei dem in Fig. 1 dargestellten ersten Ausführungsbeispiel handelt es sich um das Ende eines rohrförmigen Stabilisators. Das Bauteil 3 beim Ausführungsbeispiel nach Fig. 2 ist beispielsweise ein Lenker einer Radaufhängung. Beim Bauteil 3 der dritten Ausführungsform nach Fig. 3 kann es sich um ein Teil eines Fahrgestelles handeln, an dem sich eine Radaufhängung mittels des gezeichneten Kugelgelenks abstützt.

Die Lagerschale 2 ist bei allen drei Ausführungsformen mit einer konischen, sich in Richtung auf den Gelenkzapfen 1 verjüngenden Mantelfläche 2a ausgebildet. Weiterhin schließt sich bei allen drei Ausführungsformen an das zapfenseitige Ende der Mantelfläche 2a ein ringförmiger Kragen 2b an, der auf seiner Innenseite den Schwenkwinkel des Gelenkzapfens 1 begrenzt und auf seiner Außenseite mit einer Ringnut 2c versehen ist. In diese Ringnut 2c wird die lagerschalenseitige Randverstärkung 4a eines Dichtungsbalges 4 eingelegt, der das Kugelgelenk zwischen Lagerschale 2 und Gelenkzapfen 1 abdichtet. Das zapfenseitige Ende dieses Dichtungsbalges 4 wird ebenfalls mittels einer Randverstärkung 4b in einer Rille 1 b des Gelenkzapfens 1 festgelegt. Zur Sicherung der jeweiligen Randverstärkungen 4a bzw. 4b kann zusätzlich ein Spannring 5 verwendet werden, der bei allen drei Ausführungsbeispielen im Zusammenhang mit der Randverstärkung 4a eingezeichnet ist.

Die Festlegung der Lagerschale 2 in der jeweiligen Aufnahmeöffnung 3a erfolgt mit Hilfe eines Klemmringes 6, dessen Innenfläche als der konischen Mantelfläche 2a der Lagerschale 2 entsprechende Gegenfläche 6a ausgeführt ist und der mit einer der Aufnahmeöffnung 3a entsprechenden zylindrischen Mantelfläche 6b ausgeführt ist.

Zur Montage des Kugelgelenks in der Aufnahmeöffnung 3a des jeweiligen Bauteils 3 wird als erstes der Gelenkzapfen 1 mit seinem Kugelkopf 1a mit aufgesetztem Dichtungsbalg 4 in die Lagerschale 2 eingesetzt und die Randverstärkungen 4a und 4b des Dichtungsbalges 4 in der Ringnut 2c bzw. Rille 1b festgelegt. Anschließend wird der Klemmring 6 mit seiner konischen Gegenfläche 6a so tief wie möglich auf die konische Mantelfläche 2a der Lagerschale 2 aufgesetzt, so daß die zylindrische Mantelfläche 6b einen kleinstmöglichen Außendurchmesser einnimmt. Nunmehr wird die mit dem Klemmring 6 versehene Lagerschale 2 in die Aufnahmeöffnung 3a des Bauteils 3 eingeführt bis der Kragen 2b an der ihm zugewandten Außenflächen des Bauteils 3 zur Anlage kommt. Durch eine weg vom Gelenkzapfen 1 gerichtete Bewegung des Klemmringes 6 relativ zur Lagerschale 2 erfolgt über die konische Mantelfläche 2a und die konische Gegenfläche 6a eine formschlüssige Spreizung des Klemmringes 6, so daß dieser anschließend mit seiner zylindrischen Mantelfläche 6b spielfrei an der zylindrischen Fläche der Aufnahmeöffnung 3a anliegt. Durch die Wahl geeigneter Konuswinkel und Längen der Flächen 2a und 6a können hierbei auch größere Toleranzen hinsichtlich der Aufnahmeöffnung 3a ausgeglichen werden.

Um den Klemmring 6 in seiner die Lagerschale 2 in der Aufnahmeöffnung 3a des Bauteils 3 haltenden Stellung festzulegen, wird beim ersten Ausführungsbeispiel nach Fig. 1 ein mit konischen Endflächen 7a versehener Lagerbolzen 7 verwendet, der einerseits in eine Querbohrung 6c des Klemmringes und andererseits in Lageröffnungen 3b des Bauteils 3 angreift. Beim Ausführungsbeispiel ist die Querbohrung 6c im Bereich eines Bodens 6d des büchsenförmig ausgebildeten Klemmringes 6 ausgebildet. Um eine zuverlässige Spreizung des Klemmringes 6 beim Einschlagen des Lagerbolzens 7 zu gewährleisten, ist die Querbohrung 6c beim Ausführungsbeispiel an beiden Seiten mit einer Anzugschräge 6e ausgeführt. Wie Fig. 1 erkennen läßt, ergibt sich durch diese Konstruktion eine formschlüssige Festlegung des Klemmringes 6 am Bauteil 3 und damit eine formschlüssige Lagesicherung der Lagerschale 2 mit Hilfe des Klemmringes 6 in der Aufnahmeöffnung 3a des Bauteils 3.

Bei den beiden Ausführungsbeispielen nach den Fig. 2 und 3 wird eine kraftschlüssige Festlegung des Klemmringes 6 in der die Lagerschale 2 in der Aufnahmeöffnung 3a sichernden Stellung verwendet. Zu diesem Zweck ist zwischen dem (bei den Ausführungsformen wiederum büchsenförmigen) Klemmring 6 und der Lagerschale 2 jeweils eine Spreizfeder 8a bzw. 8b angeordnet. Beim Ausführungsbeispiel nach Fig. 2 wird diese Spreizfeder 8a durch einen Gummiring gebildet; beim Ausführungsbeispiel nach Fig. 3 ist die Spreizfeder 8b als Kegelfeder ausgeführt.

In beiden Fällen ruft die zwischen einer Abstützfläche 2d der Lagerschale 2 und dem Boden 6d des Klemmringes 6 angeordnete Spreizfeder 8a bzw. 8b eine Kraft hervor, die den Klemmring 6 in einer vom Gelenkzapfen 1 wegweisenden Richtung belastet und über die konischen Flächen 2a und 6a eine Spreizung des Klemmringes 6 bewirkt. Mit den Ausführungsformen nach den Fig. 2 und 3 erfolgt somit nicht nur selbsttätig ein Toleranzausgleich hinsichtlich der Abmessungen der Aufnahmeöffnung 3a, sondern auch ein Spielausgleich bei auftretendem Verschleiß an der Lagerfläche zwischen Kugelkopf 1a und Lagerschale 2.

### Bezugszeichenliste:

- 1: Gelenkzapfen
- 1a: Kugelkopf
- 1b: Rille
- 2: Lagerschale
- 2a: Mantelfläche
- 2b: Kragen
- 2c: Ringnut
- 2d: Abstützfläche
- 3: Bauteil
- 3a: Aufnahmeöffnung
- 3b: Lageröffnung
- 4: Dichtungsbalg
- 4a: Randverstärkung
- 4b: Randverstärkung
- 5: Spannring
- 6: Klemmring
- 6a: Gegenfläche
- 6b: Mantelfläche
- 6c: Querbohrung
- 6d: Boden
- 6e: Anzugschräge
- 7: Lagerbolzen
- 7a: Endfläche
- 8a: Spreizfeder
- 8b: Spreizfeder

## Patentansprüche

1. Vorrichtung zur Festlegung einer Lagerschale (2) eines Gelenkes, insbesondere für Radaufhängungen von Kraftfahrzeugen, in einer Aufnahmeöffnung (3a), insbesondere eines Lenkers oder Stabilisators,
**dadurch gekennzeichnet**,
daß die Lagerschale (2) mit einer konischen, sich in Richtung auf den Gelenkzapfen (1) verjüngenden Mantelfläche (2a) ausgebildet ist, auf der ein Klemmring (6) mit einer entsprechend konischen Gegenfläche (6a) angeordnet ist, der sich mit seiner zylindrischen Mantelfläche (6b) in der Aufnahmeöffnung (3a) abstützt.

2. Vorrichtung nach Anspruch 1, dadurch gekennzeichnet, daß der Klemmring (6) mit einer Querbohrung (6c) für einen Lagerbolzen (7) versehen ist, der seinerseits in Lageröffnungen (3b) des die Lagerschale (2) aufnehmenden Bauteils (3) eingreift.

3. Vorrichtung nach Anspruch 2, dadurch gekennzeichnet, daß die Querbohrung (6c) im Bereich eines geschlossenen Bodens (6d) des büchsenförmig ausgebildeten Klemmringes (6) ausgebildet ist.

4. Vorrichtung nach Anspruch 1, dadurch gekennzeichnet, daß der Klemmring (6) mit einer Abstützfläche für eine zwischen dem Klemmring (6) und der Lagerschale (2) angeordnete Spreizfeder (8a,8b) versehen ist.

5. Vorrichtung nach Anspruch 4, dadurch gekennzeichnet, daß die Spreizfeder (8a) als Gummiring ausgebildet ist.

6. Vorrichtung nach Anspruch 4, dadurch gekennzeichnet, daß die Spreizfeder (8b) als Kegelfeder ausgebildet ist.

7. Vorrichtung nach mindestens einem der Ansprüche 1 bis 6, dadurch gekennzeichnet, daß die Lagerschale (2) und der Klemmring (6) aus Kunststoff, vorzugsweise Polyacetalen (POM) hergestellt sind.

## Claims

1. Device for fixing the bearing shell (2) of a joint, in particular for wheel-suspension systems of motor vehicles, in a receiving opening (3a), in particular in a guide rod or stabilizer,
**characterised in that**
the bearing shell (2) is constructed with a conical superficies (2a) which tapers in the direction of the joint pin (1) and on which a clamping ring (6) is disposed with a correspondingly conical counter-face (6a), which clamping ring is supported with its cylindrical superficies (6b) in the receiving opening (3a).

2. Device according to claim 1, characterised in that the clamping ring (6) is provided with a transverse bore (6c) for a bearing stud (7) which, for its part, engages in bearing openings (3b) in the component (3) receiving the bearing shell (2).

3. Device according to claim 2, characterised in that the transverse bore (6c) is constructed in the region of a closed base (6d) of the clamping ring (6), which clamping ring is of sleeve-shaped construction.

4. Device according to claim 1, characterised in that the clamping ring (6) is provided with a supporting face for a spreading spring (8a, 8b) disposed between the clamping ring (6) and the bearing shell (2).

5. Device according to claim 4, characterised in that the spreading spring (8a) is constructed as a rubber ring.

6. Device according to claim 4, characterised in that the spreading spring (8b) is constructed as a conical spring.

7. Device according to at least one of claims 1 to 6, characterised in that the bearing shell (2) and the clamping ring (6) are manufactured from plastic, preferably polyacetalene (POM).

## Revendications

1. Dispositif pour fixer une coquille de coussinet (2) d'une articulation, notamment pour des suspensions de roues de véhicules automobiles, dans une ouverture de logement (3a), notamment d'un bras oscillant transversal ou d'une barre anti-roulis,
caractérisé en ce que la coquille de coussinet (2) est conçue avec une surface latérale (2a) conique, qui se rétrécit en direction du pivot (1) et sur laquelle est agencé un anneau de serrage (6) qui a une surface complémentaire (6a) conique de manière correspondante et qui s'appuie avec sa surface latérale (6b) cylindrique dans l'ouverture de logement (3a).

2. Dispositif selon la revendication 1, caractérisé en ce que l'anneau de serrage (6) est muni d'un trou transversal (6c) pour un axe de coussinet (7) qui pénètre pour sa part dans des ouvertures de coussinet (3b) de la pièce (3) logeant la coquille de coussinet (2).

3. Dispositif selon la revendication 2, caractérisé en ce que le trou transversal (6c) est conçu dans la zone d'un fond fermé (6d) de l'anneau de serrage (6) conçu en forme de douille.

4. Dispositif selon la revendication 1, caractérisé en ce que l'anneau de serrage (6) est muni d'une surface d'appui pour un ressort écarteur (8a, 8b) agencé entre l'anneau de serrage (6) et la coquille de coussinet (2).

5. Dispositif selon la revendication 4, caractérisé en ce que le ressort écarteur (8a) est conçu comme un anneau de caoutchouc.

6. Dispositif selon la revendication 4, caractérisé en ce que le ressort écarteur (8b) est conçu comme un ressort conique.

7. Dispositif selon au moins l'une des revendications 1 à 6, caractérisé en ce que la coquille de coussinet (2) et l'anneau de serrage (6) sont fabriqués en matière plastique, de préférence en polyacétalène (POM).
